# EUROPÄISCHE PATENTSCHRIFT

(11) **EP 1 593 867 B1**
(45) Veröffentlichungstag und Bekanntmachung des Hinweises auf die Patenterteilung: **17.12.2008**
(21) Anmeldenummer: 05009286.5
(22) Anmeldetag: 28.04.2005
(51) Int. Cl.: F16D 3/70

(54) **Kupplung mit vorgespannten Lagerelementen**
Coupling with prestressed bearing elements
Accouplement avec des éléments de portage prestressés

(30) Priorität: 04.05.2004 EP 04010509
(43) Veröffentlichungstag der Anmeldung: 09.11.2005
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- FR-A- 1 093 588
- GB-A- 571 470
- US-A- 3 477 246

## Beschreibung

Die Erfindung betrifft eine Kupplung zur Übertragung großer Drehmomente. Kernelement der Kupplung ist hierbei ein vorgespanntes elastomerhaltiges Konuslager, welches es ermöglicht, dass Kräfte, die auf die Kupplung auf Grund von großen Drehmomenten ausgeübt werden, hinreichend aufgenommen, beziehungsweise gedämpft werden können. Die erfindungsgemäße Kupplung weist mehrere derartiger Elemente auf, die konstruktiv in der Weise in die Kupplung integriert sind, dass eine Trennung der zu kuppelnden Teile, beispielsweise Getriebe / Motor- oder Antriebswelle, leicht durchgeführt werden kann.

In Systemen mit angetriebenen Bauteilen treten auch Kräfte auf, die unerwünscht sind und die entsprechenden Bauteile beschädigen oder zerstören können. Insbesondere Kupplungen zwischen Getriebe und Motor, Getriebe und Generator oder Antriebswelle und Getriebe machen angreifenden Torsions- und Schwingungskräften zu schaffen, die es gilt, zu verhindern oder aber mindestens zu reduzieren. Dies kann manchmal bereits erreicht werden durch Einbau entsprechend Kräfte und Schwingungen reduzierender Getriebe-, Motor- oder Wellenlagerungen.

In sehr großen Systemen, insbesondere in Windkraftanlagen, treten neben den üblichen Maschinenantriebskräften auch noch andere durch Wind erzeugte Kräfte unterschiedlichster Art auf. Durch die Unregelmäßigkeiten des Windes hinsichtlich seiner Stärke und Richtung, die sich innerhalb kurzer Zeit ändern können, treten permanent unterschiedlich starke Zug-, Druck- und Querkräfte auf, die um so größer sind, je stärker die Windkraft und je größer die Windkraftanlage ist. Bei Stürmen oder Orkanen müssen Windkraftanlagen sogar extremen Belastungen standhalten. Die Bauteile, inklusive der Kupplungen müssen dabei die Beanspruchungen über eine lange Betriebszeit unbeschädigt aushalten.
Um dies zu gewährleisten benötigen derartige Anlagen auch Dämpfungselemente in den Kupplungen selbst. Im Stand der Technik werden hierfür in der Regel einfache Gummischeiben oder Federelemente in den Kupplungsscheiben eingesetzt, welche aber oft nicht ausreichen, die Kupplung selbst ausreichend zu entlasten. Ein typisches Beispiel für eine solche einfache elastische Kupplung wird im britischen Patent GB 571,470 (27.08.1945) beschrieben. Die eine der beiden Kupplungsscheiben weist mehrere kreisförmige auf beiden Seiten der Scheibe angebrachte halbkugelförmige Aussparungen mit einem mittigen Dehnloch auf, in denen entsprechend geformte Gummiklötze Platz finden. Durch entsprechende Befestigungsmittel werden die Gummiklötze in die Dehnöffnung hinein gepresst, wodurch die Scheiben gegeneinander verspannt und somit elastisch miteinander verbunden werden.
Es bestand somit die Aufgabe, eine Kupplung bereitzustellen, die in Bezug von Dämpfung und Reduzierung von einwirkenden Kräften, insbesondere bei Windkraftanlagen, verbesserte Eigenschaften aufweist und sich zudem optimal und individuell auf die vorherrschenden Kräfte- und Schwingungsverhältnisse anpassen und einstellen lässt.

Die Aufgabe wurde durch Bereitstellung der Kupplung, wie sie durch die Ansprüche definiert ist, gelöst. Durch den Einbau entsprechend konstruierter vorgespannter konusförmiger Elastomerlager kann die kardanische Steifigkeit, bzw. Torsionssteifigkeit des Systems vorbestimmt und damit den vorhandenen Massen angepasst werden, so dass das Nicken oder Ausscheren der angeschlossenen Aggregate, zum Beispiel des Getriebes, sogar ohne zusätzliche Abstützungen bzw. Lager verhindert oder zumindest erheblich reduziert werden kann. Durch die konusförmige Konstruktion, oder genauer den gewählten Konuswinkel, und die individuell auf das System, bzw. die Anlage einstellbare Vorspannung der eingesetzten Elastomerlager kann das Verhältnis der Torsionssteifigkeit um die betreffende Drehachse zur kardanischen Steifigkeit (entspricht der Torsionssteifigkeit um eine senkrecht zur betreffenden Drehachse stehenden Achse) festgelegt werden.

Gegenstand der Erfindung ist somit eine Kupplung geeignet zur Übertragung von großen Drehmomenten, bestehend im wesentlichen aus einer Kupplungsantriebsscheibe (2), einer Kupplungsabtriebsscheibe (3), welche jeweils axial angeordnete Flanschstücke zur Aufnahme der Antriebs- und Abtriebsmittel aufweisen, sowie mehreren aus mehreren Bauteilen bestehenden Kupplungselementen (8), die zwischen besagten Scheiben angeordnet und mit diesen durch Befestigungsmittel (6, 7) fest verbunden sind, wobei jedes Kupplungselement ein erstes (1A) und zweites (1B) axial ausgerichtetes, konusförmiges, durch besagte Befestigungsmittel vorgespanntes Elastomerlager aufweist, und besagtes zweites Elastomerlager (1B) durch eine entsprechend passende konusförmige Aussparung in den Kupplungsscheiben (2, 3) aufgenommen und gehalten wird, wobei besagtes erstes konusförmige Elastomerlager (1A) durch ein zwischen Antriebs- und Abtriebsscheibe angeordnetes, auf seiner Innenseite mit einem entsprechenden Konus ausgestatteten Bauelement (9) passend aufgenommen und gehalten wird.

Gegenstand der Erfindung ist insbesondere eine entsprechende Kupplung, bei welcher ein Kupplungselement (8) im wesentlichen besteht aus:
(i) einem auf seiner Innenseite konusförmigen Ring (9),
(ii) einem konusförmigen Elastomerlager (1A) und einem konusförmigen Elastomerlager (1B), welche jeweils mindestens eine Elastomerschicht (10, 11), die von zwei nicht-elastischen Schichten (12, 14) begrenzt werden, aufweisen,
(iii) einem abtriebsseitigen Spannkegel (4),
(iv) einem antriebsseitigen Spannkegel (5), und
(v) Befestigungsmitteln, vorzugsweise bestehend aus einer Spannmutter (6) mit einem Schraubbolzen (7), wobei die Spannmutter abtriebsseitig oder antriebsseitig angebracht sein kann.

Das Elastomerlager (1A) unterscheidet sich im Aufbau im Prinzip nicht von dem Elastomerlager (1B). Beide stellen erfindungsgemäß, räumlich gesehen, Kegelsegmente dar, mit einer umlaufenden konusförmigen, schrägen Fläche und ebenen, unterschiedlich großen Kreisflächen. Vorzugsweise ist die umlaufende konusförmige schräge Fläche eben, sie kann aber erfindungsgemäß auch konkav oder konvex gekrümmt sein.

Der Konuswinkel des kegelsegmentförmigen Lagers (1A) oder (1B) ist erfindungsgemäß definiert durch den Winkel, der durch die betreffende schräge Konusfläche des jeweiligen Kegelsegments und seiner senkrechten Achse gebildet wird, wobei die senkrechte Achse identisch mit der zentralen Achse der Kupplung, bzw. der axial angeordneten Flanschstücke zur Aufnahme der An- und Abtriebsmittel ist. Vorzugsweise ist der Konuswinkel der beiden Elastomerlager identisch und kann in einem Bereich zwischen 10° und 50°, vorzugsweise 20° und 40°, insbesondere zwischen 25° und 35° liegen.

Das Elastomerlager (1A) ist definitionsgemäß von dem entsprechend passend konusförmigen Trägerbauteil (9) umgeben, bzw. ist in diesem gelagert. Vorzugsweise ist das Bauteil (9) ein Ring mit einer konusförmigen Innenfläche, der zwischen den Kupplungsscheiben (2) und (3) radial um die zentrale Achse der Scheiben angebracht ist, und zusammen mit der optional einsetzbaren Distanzscheibe (15) im wesentlichen den Abstand der beiden Kupplungsscheiben (2) (3) zueinander bestimmt.

Das Elastomerlager (1B) stellt das andere konusförmigen Kegelsegment dar, welches in einem dafür vorgesehenen, entsprechend geformten und dimensionierten, konusförmigen Kegelsegmentraum, bzw. konischer Bohrung, in einer der beiden Kupplungsscheiben passend eingeführt und gelagert wird. Der Konus der Aussparung in der betreffenden Kupplungsscheibe ist dabei so geschnitten, dass die größere Kreisfläche des entstandenen Kegelsegmentraumes nach außen und die kleinere Kreisfläche nach innen, in Richtung des Elastomerlagers (1A), bzw. des Konusteils (9) gerichtet ist, welches sich, wie gesagt, zwischen den beiden Kupplungsscheiben befindet. Die betreffende Kupplungsscheibe weist somit entsprechend geformte, radial umlaufende Aussparungen auf, die in ihrer Anzahl der Zahl der Kupplungselemente (8) als solche entsprechen.

Lager (1A) und Lager (1B) sind so zueinander angeordnet, dass sie direkt und vorzugsweise passend aufeinander liegen, so dass sie durch geeignete Befestigungsmittel zusammen mit den Scheiben (2) (3) gegeneinander verspannt werden können. Die vorgegebene Geometrie bedingt, dass die Lager (1A) und (1B) mit ihrer jeweils kleineren oberen oder unteren Kreisfläche des von ihnen gebildeten Kegelsegmentes aufeinander zu liegen kommen, so dass ihre Konuswinkel, wie oben definiert, entgegengesetzt sind. Dies hat zur Folge, dass die Elastomerlager eines Kupplungselementes (8) einen V-förmigen Querschnitt zueinander bilden (siehe Abbildungen).

Während eine der beiden Scheiben (2), (3), wie beschrieben, die konusförmige Aussparung, welche das Lager (1B) aufzunehmen vermag, aufweist, ist die andere Kupplungsscheibe lediglich mit einer entsprechend positionierten Bohrung versehen, welche das Befestigungsmittel (7), vorzugsweise ein Gewindebolzen mit Außen und / oder Innengewinde, aufnimmt. Welche der beiden Scheiben, die antriebsseitige oder abtriebsseitige, die konusförmige Aussparung, bzw. die Bohrung für den Bolzen (7) aufweist, ist nicht erfindungswesentlich, da beides in gleicher Weise möglich ist (in den Abbildungen ist jeweils die antriebsseitige Kupplungsscheibe mit der konusförmigen Aussparung zur Aufnahme des Elastomerlagers (1B) dargestellt).

Ein jedes erfindungsgemäße Kupplungselement (8) kann gegebenenfalls eine Distanzscheibe aufweisen, welche zwischen dem Elastomerlager (1A), bzw. dem Konuselement (9) vorzugsweise auf dessen sich öffnenden Seite, und einer Kupplungsscheibe (2, 3) angebracht ist. Diese Distanzscheibe hat den Vorteil, dass sie bei Lösen der Befestigungs- bzw.
Spannmittel leicht entfernt werden kann und dadurch Montage und Demontage, bzw. das Austauschen von einzelnen Elementen erleichtert.

Zur Verspannung der beiden Elastomerlager (1A), (1B) eines jeden Kupplungselementes (8) sind neben dem genannten Bolzen (7) weitere Spannmittel notwendig. Diese Spannmittel werden vorzugsweise durch die Spannkegel (4) und (5) sowie die Spannmutter (6) zur Verfügung gestellt, welche der vorgegebenen Geometrie entsprechend geformt und gestaltet sind. Vorzugsweise ist die Spannmutter (6) zusammen mit dem Spannkegel (5) in der konusförmigen Aussparung der antriebs- oder abtriebsseitigen Kupplungsscheibe untergebracht.

Die Elastomerlager (1A, 1B) sind vorzugsweise hinsichtlich ihrer Zusammensetzung identisch, dass heißt, sie weisen die gleiche Anzahl und gleiche Dicke von elastischen und nicht-elastischen Schichten auf. Es könne aber auch erfindungsgemäß Lager mit unterschiedlicher Anzahl und Dicke verwendet werden.

Vorzugsweise umfasst eine erfindungsgemäße Kupplung Elastomerlager (1A, 1B), welche zwei Elastomerschichten (10, 11) aufweisen, die durch eine nicht-elastische Zwischenschicht (13) getrennt sind. Die Elastomerschicht, bzw. -schichten werden durch begrenzende nicht-elastische Schichten (13, 14) abgeschlossen.

Dicke und Höhe der Elastomerlager in einem einzelnen Kupplungselement (8) richtet sich nach den Bedingungen, die im angetriebenen System herrschen können. Ebenso hievon abhängig ist die Anzahl und Größe der Kupplungselemente die für eine Kupplung benötigt werden. In der Regel werden mindesten vier solcher Elemente, die vorzugsweise symmetrisch, bzw. gleichmäßig in einem bestimmten, möglichst großen Radius um den zentralen Mittelpunkt der Scheiben angeordnet sind, benötigt. Vorzugsweise weist eine erfindungsgemäße Kupplung mindestens sechs, insbesondere aber zwischen acht und zwölf solcher Elemente (8) auf. Bei großen Anlagen mit sehr großen Kupplungen, wie dies z.B. bei Windkraftanlagen der Fall ist, können auch deutlich mehr als zwölf solcher Kupplungselemente zum Einsatz kommen. Der Durchmesser der Kupplungselemente kann entsprechend weit variieren, vorzugsweise zwischen 3 und 20 cm.

Die Elastomerteile der Lager (1A, 1B) müssen, um Passgenauigkeit zu gewährleisten, den gleichen Konuswinkel aufweisen, wie die entsprechende konische Bohrung in der betreffenden Kupplungsscheibe, bzw. im Ringelement (9).

Für unterschiedliche Typen von Anlagen, insbesondere Windkraftanlagen, werden Elastomerlager mit unterschiedlicher Steifigkeit benötigt. Die erforderliche Steifigkeit wird durch die Anzahl der Elastomerschichten, deren Dicke, der Shore-Härte der Elastomerkörper, durch die Vorspannung der Elastomerkörper und durch den Konuswinkel der betreffenden Bauteile bestimmt.
Die erfindungsgemäß verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder Fluor- Kautschuke bzw. Kunststoffe.

Die Elastomerlager können erfindungsgemäß auch mit Aussparungen versehen sein. Diese Aussparungen sind parallel zur Längsachse der Elastomerschicht, bzw. parallel zu den Konusflächen angeordnet und können verschiedene Größen und Formen aufweisen. Durch diese kann die Steifigkeit in der horizontalen Ebene unterschiedlich für die Längs- und Querrichtung eingestellt werden.

In bestimmten Fällen können auch Elastomere mit unterschiedlicher Härte bzw. Elastizität zwischen den Schichten verwendet werden, wodurch eine noch größere Anpassung an geforderte Bedingungen erzielt werden kann.
Die nicht-elastomeren, bzw. nicht-elastischen Schichten (12, 13, 14) sind erfindungsgemäß aus weitestgehend unelastischen Werkstoffen mit geringer Kompressibilität gefertigt. Vorzugsweise sind dies Metallbleche, aber auch andere Materialien, wie harte Kunststoffe, Verbundwerkstoffe oder carbonfaserhaltige Werkstoffe sind einsetzbar.
Der elastomere Werkstoff ist mit den festen Bauteilen oder nicht-elastischen Schichten fest verbunden, vorzugsweise durch Vulkanisierung. Aber auch andere Befestigungsmöglichkeiten, wie beispielsweise mittels Klebung oder Fügung, sind erfindungsgemäß möglich.

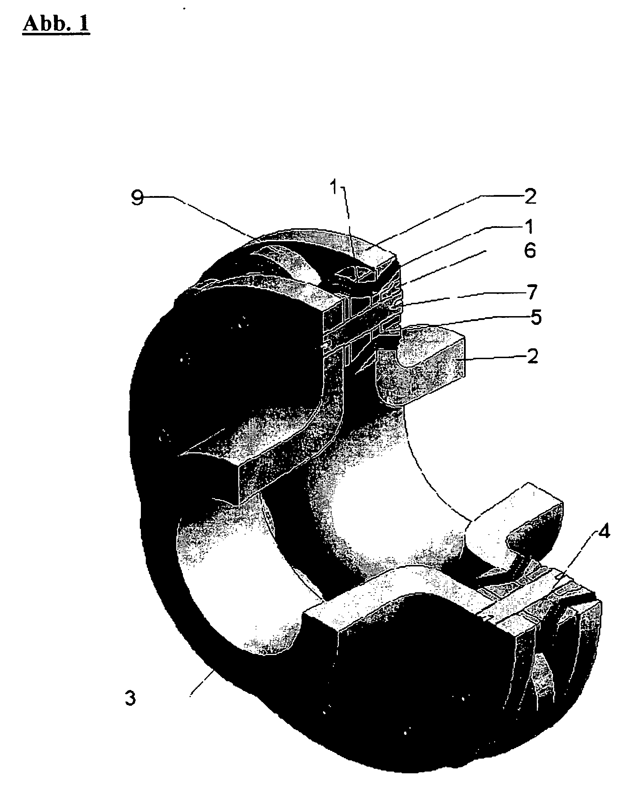

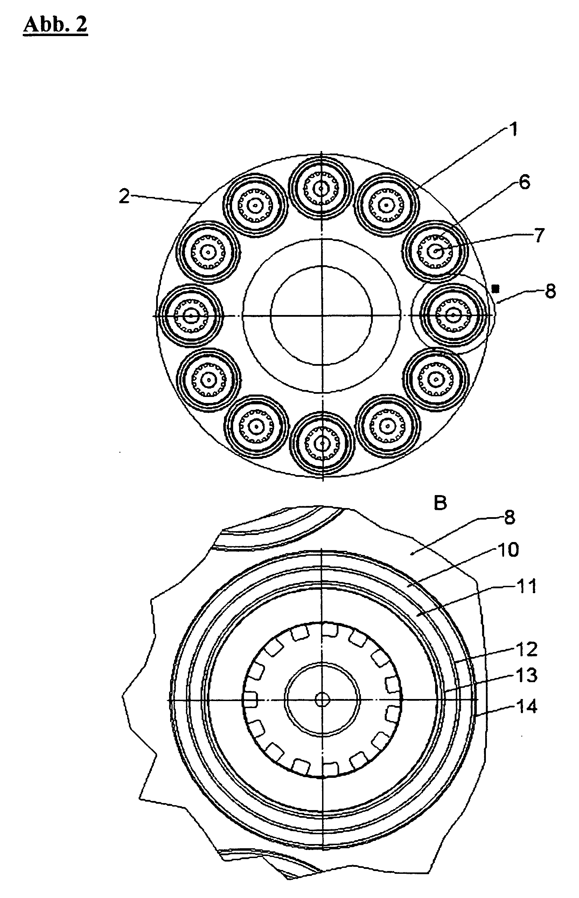

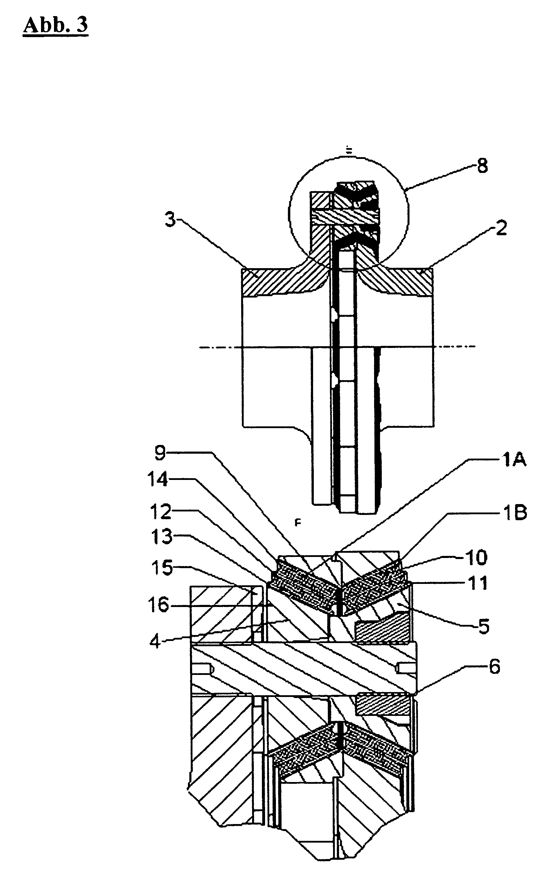

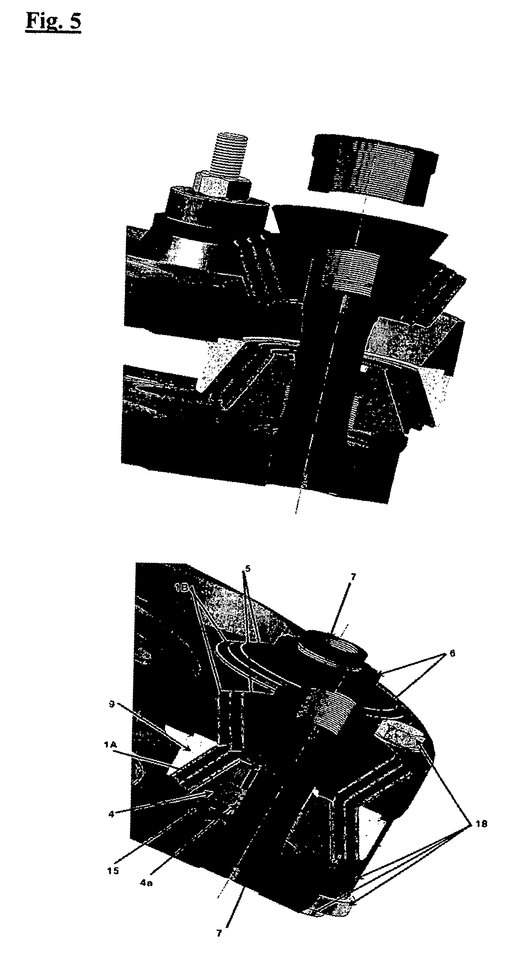

Im folgenden wird kurz die Demontage, bzw. Montage der der erfindungsgemäßen Kupplung, die in einer Anlage fest montiert ist, am Beispiel der Kupplung, wie sie in den Abb. 1 - 6 dargestellt ist, beschrieben:
Zur Demontage können die einzelnen Kupplungselemente (8) ohne oder mit geringer axialer Verschiebung der Kupplungsscheiben (2, 3) entfernt werden. In axialer Richtung ist dazu nur ein geringer Platzbedarf erforderlich. Hierfür wird zuerst die Spannmutter (6) gelöst dann Spannkegel (5) und das mit diesem verspannte Elastomerbauteil (1 B) herausgenommen. Anschließend wird der Bolzen (7) entfernt. Nun wird die am Getriebe befestigte Abtriebsscheibe (3) mit dem gesamten Getriebe, welches in axialer Richtung aufgrund der weichen Lagerung im allgemeinen verschiebbar ist, um einen kleinen Weg (16) nach links geschoben, so dass sich das zwischen den Scheiben befindliche Elastomerbauteil (1A) entspannen kann. Nach dem entspannen kann die Distanzscheibe (15) herausgenommen werden. Anschließend wird der Konusring (9) mit dem Elastomerbauteil (1A) um den besagten Weg (16) nach links geschoben und radial herausgenommen.
Für den Fall, dass das Getriebe nicht verschoben werden kann, wird nach dem Ausbau der Elemente (5), (6) und (1B) der Spannkegel (4) mit einer Hilfsvorrichtung soweit nach rechts geschoben, bis das Lager (1A) soweit gespannt ist, dass die Distanzscheibe (15) herausgenommen werden kann. Anschließend können wie vorher die restlichen Teile ausgebaut werden.

Die Elastomerbauteile können aufgrund von Inhomogenitäten des Materials beim Vorspannen von Ihrer Mittelachse abweichen. Dies hat zur Folge, dass sich mit zunehmender Vorspannung deren Mittelpunkt verschiebt und damit die beiden Kupplungsscheiben (2) und (3) radial verschoben werden, so dass diese nicht mehr zueinander laufen oder anders ausgedrückt, dass deren Mittelachsen gegeneinander verschoben sind, so dass bei der Rotation Zwangskräfte entstehen.

Diese radialen Verschiebungen können vermieden bzw. um mehr als 50% verringert werden, wenn die erfindungsgemäße Kupplung in einer weiteren, bevorzugten Ausführungsform entsprechende Vorrichtungen aufweist bzw. vorsieht, die die passgenaue Zentrierung der Scheiben (2), (3) zueinander sicherstellt. Solche Vorrichtungen bestehen aus einer Ausrichtvorrichtung (18).
Ferner kann die erfindungsgemäße Kupplung in allen beschriebenen Ausführungsformen auch zusätzlich Vorspann-Hilfsvorrichtungen (17) aufweisen. Diese Teile können so gestaltet sein, dass sie nur für die Montage oder Demontage der Kupplung Bestandteil derselbigen sind oder zumindest von den baulichen Gegebenheiten der Kupplung Gebrauch machen.

Gegenstand der Erfindung ist somit eine entsprechende Kupplung, welche zwei oder mehrer Ausrichtvorrichtungen für die Kupplungsscheiben (2) und (3) aufweist, welche vorzugsweise Passbolzen (18) sind, die die Kupplungsscheiben zueinander ausrichten.

Gegenstand der Erfindung ist ferner eine entsprechende Kupplung, die Vorspann-Hilfsvorrichtungen (17) besitzt, die ggf. ganz oder teilweise, nach Montage oder Demontage wieder entfernt werden können.

Die Ausrichtvorrichtung (18) besteht vorzugsweise im wesentlichen aus einem Passbolzen. Die gesamte Kupplung besitzt je nach Größe zwei bis zwölf, vorzugsweise vier bis acht, insbesondere drei bis vier, solcher Passbolzen. Zuerst werden beide Scheiben (2, 3)mit mehreren dieser Passbolzen (18) miteinander verbunden. Diese Passbolzen sitzen in eng tolerierten Bohrungen der beiden Scheiben, so dass sie durch die Bolzen exakt zueinander zentriert sind. Gleichzeitig sind die Bolzen so gestaltet, dass die beiden Scheiben (2, 3) nach Befestigung der Bolzen bereits das endgültige Abstandsmaß haben und planparallel zueinander sind.

Die zwischen den Scheiben einzubauenden Elemente (4) mit (1A), (9), werden in einer weiteren Ausführungsform mit der Vorspann- Hilfsvorrichtung (17 a, b, c) soweit vorgespannt, dass die Distanzscheibe (15) eingeschoben werden kann. In einer bevorzugten Ausführungsform wird die Vorspann-Hilfsvorrichtung entfernt und der gleich Vorgang an mehreren weiteren Elementen (4) durchgeführt. Durch die aufgrund der Federkraft aus dem Konuslager (1A) jetzt wirkende Axialkraft und die Dimension der Ausrichtvorrichtung (18) ist die Anzahl der Elemente begrenzt. Somit werden im ersten Durchgang nur wenige am Umfang möglichst gleichmäßig verteilte Elemente (vorzugsweise 3 bis 4) eingespannt. Anschließend werden die gegenseitigen Elemente (1B) mit Kegel (5), Bolzen (7) und Mutter (6) eingebaut und verspannt, so dass nach dem Verspannen der Elastomerelemente wieder Kräftegleichgewicht besteht.
In gleicher Methode werden die restlichen Elemente (4, 5) eingebaut.

Mit Hilfe der Ausrichtvorrichtungen wird also die radiale Verschiebung durch Unregelmäßigkeiten im Elastomer dadurch reduziert, dass die Teile im bereits eingespannten Zustand, nachdem die bei der axialen Verspannung entstehende radiale Verschiebung bereits erfolgt ist, mit der Scheibe (3) verbunden werden.

Da die Montage in der Regel unter ungünstigen Bedingungen auf der Windkraftanlage erfolgt, ist es sinnvoll, das arbeitsintensive Vorspannen der Elemente bereits vor der Kupplungsmontage durchzuführen.
Die Vorspann-Hilfsvorrichtung (17) zur Vorspannung der Elemente muss möglichst einfach, leicht und kostengünstig sein, da der Rücktransport und die Wiederverwendung der Teile zumindest bei Auslandsmontagen fraglich ist. Deshalb werden für die Vorspannung weitestgehend Elemente verwendet, welche bereits Bestandteil der Kupplung sind.
Ein weiterer Vorteil dieses Systems besteht darin, dass die Kupplungsbauteile fast in der gleichen Reihenfolge für die weitere Montage verwendet werden können, wie sie beim Entspannen der Elemente frei werden. Das ist sehr vorteilhaft, da auf der Anlage insbesondere bei der Montage sehr beengte Platzverhältnisse bestehen und die Einzelbauteile sonst viel Lagerplatz und Kran- Kapazität benötigen würden.
Somit besteht die Vorspannvorrichtung vorzugsweise aus der Distanzscheibe (15) dem Kegel (5), sowie drei weiteren Hilfsteilen (17 a, b, c). Lediglich eine Distanzscheibe (15) ist in diesem Fall zusätzlich erforderlich, da die erste Scheibe vor dem Lösen der Hilfsvorrichtung benötigt wird.

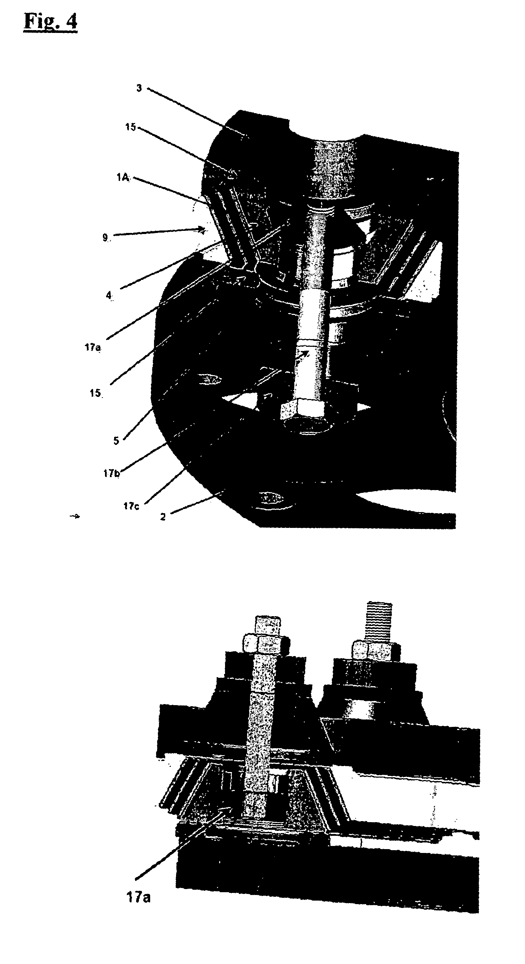

Abb. 4 zeigt in einer besonderen Ausführungsform eine schmale Mutter (17a), die so schmal gestaltet ist, dass sie nach dem Lösen umgeklappt und durch die Bohrung herausgenommen werden kann. Alternativ kann hier auch eine Mutter mit Innen- und Außengewinde in das Innengewinde des Spannkegels (4) geschraubt werden.

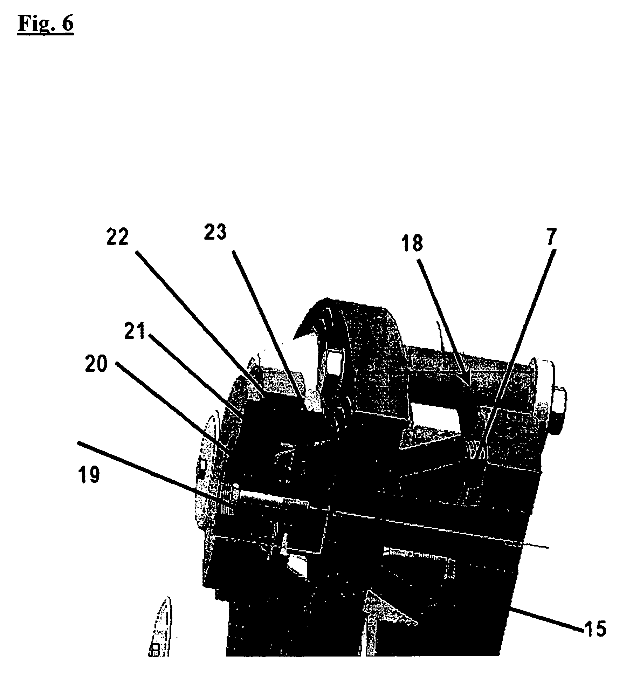

Da für das hohe Drehmoment der Kupplung große Reibkräfte zwischen den Bauteilen (3), (15), (4) und (5) erforderlich sind, muss der Bolzen (7) mit hoher Kraft vorgespannt werden. Dies kann durch den Einsatz starker Drehmomentübersetzer oder durch hydraulisches Vorspannen erfolgen. Abb. 6 zeigt in einer weiteren Ausführungsform der Erfindung das Vorspannen mit einem Hydraulikzylinder (21). Hierbei wird der Bolzen (7) durch den Vorspannbolzen (19) für die Montage verlängert wird. Das ist aus Platzgründen vorteilhaft, da der Einbauraum so eng ist, dass der Bolzen (7) nicht in der für die Vorspannung erforderlichen Länge eingeführt werden kann. Ebenso Platz sparend ist die Aufteilung des Vorspannzylinders (22) und des separaten Druckstückes (23). Das Druckstück (23) hat hierbei radiale Öffnungen, um unter der Vorspannlast die Mutter (6) anzuziehen.
Gegenstand der Erfindung ist somit eine entsprechende Kupplung, bei welcher vorzugsweise jedes einzelnen Kupplungselement (8) zusätzlich Hydraulik-Vorspannvorrichtungen (19, 20, 21, 22, 23) aufweist, welche die Vorspannung des Schraubbolzens (7) erleichtert.

Der Vorteil der erfindungsgemäßen Kupplung ist also unter anderem auch in der Trennung des Getriebes vom Rotorflansch über die Kupplung ohne zusätzliche Trennebene, also auch bei kleinstem Raumangebot bei Montage oder Demontage im Zuge von Wartungs- oder Reparaturarbeiten möglich.

Im folgenden werden die Bezugsgrößen, die in den Zeichnungen und Abbildungen verwendet werden, näher beschrieben.

| | |
|---|---|
| 1A | Ein- oder mehrschichtiges Konuslager innerhalb von (9) |
| 1B | Ein- oder mehrschichtiges Konuslager innerhalb von (2) |
| 2 | Kupplungs-Antriebsscheibe |
| 3 | Kupplungs-Abtriebsscheibe |
| 4 | Spannkegel Abtriebsseite |
| 5 | Spannkegel Antriebsseite |
| 6 | Spannmutter |
| 7 | Bolzen |
| 8 | Kupplungselement komplett |
| 9 | Konusring |
| 10 | Elastomerschicht außen |
| 11 | Elastomerschicht innen |
| 12 | Zwischenblech |
| 13 | Innenblech |
| 14 | Außenblech |
| 15 | Distanzscheibe |
| 16 | Spalt |
| 17 a, b, c | Vorspann-Hilfsvorrichtung |
| 18 | Ausrichtvorrichtung |
| 19 | Vorspannbolzen |
| 20 | Vorspannmutter |
| 21 | Hydraulischer Vorspannzylinder |
| 22 | Kolben |
| 23 | Druckstück |

Im folgenden werden die Abbildungen kurz beschrieben:

| | | |
|---|---|---|
| Abb. 1 | 3-D Ansicht der erfindungsgemäßen Kupplung | |
| Abb. 2 | (A) | Draufsicht auf die erfindungsgemäße Kupplung, bestehend aus 12 einzelnen Kupplungselementen (8), welche wiederum Elastomerlager, bestehend aus zwei Gummischichten (10, 11), getrennt durch ein Zwischenblech (12), und Außen- und Innenblech (14, 13), umfassen. |
| | (B) | Draufsicht eines einzelnen Kupplungselementes in der Ausführung wie unter (A) beschrieben. |
| Abb. 3 | Seitenansicht eines einzelnen Kupplungselementes (8) eingebaut zwischen den Kupplungsscheiben (oben), sowie einzeln in Vergrößerung (unten). | |
| Abb. 4 | Montage Vorspannung der Elemente zum Transport und zur Montagevorbereitung | |
| Abb. 5 | Montage der Elemente | |
| Abb. 6 | Hydraulische Spannung des Bolzens für hohe Vorspannung zur Übertragung großer Reibkräfte | |

Die erfindungsgemäße Kupplung kann vorzugsweise in Anlagen eingesetzt werden, in denen große Drehmomente und große Kräfte unterschiedlichster Art auftreten können. Hierbei sind insbesondere Windkraftanlagen zu nennen.

Gegenstand der Erfindung ist somit neben der beschrieben Kupplung selbst auch deren Verwendung zur Erzielung optimierter Torsionssteifigkeit in Maschinen und Anlagen, insbesondere Windkraftanlagen, in denen große Drehmomente und / oder Kräfte übertragen werden.

## Patentansprüche

1. Kupplung geeignet zur Übertragung von großen Drehmomenten, bestehend im wesentlichen aus einer Kupplungsantriebsscheibe (2), einer Kupplungsabtriebsscheibe (3), welche jeweils axial angeordnete Flanschstücke zur Aufnahme der Antriebs- und Abtriebsmittel aufweisen, sowie mehreren aus mehreren Bauteilen bestehenden Kupplungselementen (8), die zwischen besagten Scheiben angeordnet und mit diesen durch Befestigungsmittel (6, 7) fest verbunden sind, wobei jedes Kupplungselement ein erstes (1A) und zweites (1B) axial ausgerichtetes, konusförmiges, durch besagte Befestigungsmittel vorgespanntes Elastomerlager aufweist, und besagtes zweites Elastomerlager (1B) durch eine entsprechend passende konusförmige Aussparung in den Kupplungsscheiben (2, 3) aufgenommen und gehalten wird,
**dadurch gekennzeichnet, dass** besagtes erstes konusförmige Elastomerlager (1A) durch ein zwischen Antriebs- und Abtriebsscheibe angeordnetes, auf seiner Innenseite mit einem entsprechenden Konus ausgestatteten Bauelement (9) passend aufgenommen und gehalten wird.

2. Kupplung nach Anspruch 1, **dadurch gekennzeichnet**, das Kupplungselement (8) im wesentlichen besteht aus:
(i) einem auf seiner Innenseite konusförmigen Ring (9),
(ii) einem konusförmigen Elastomerlager (1A) und einem konusförmigen Elastomerlager (1B), welche jeweils mindestens eine Elastomerschicht (10, 11), die von zwei nicht-elastischen Schichten (12, 14) begrenzt werden, aufweisen,
(iii) einem abtriebsseitigen Spannkegel (4),
(iv) einem antriebsseitigen Spannkegel (5), und
(v) Befestigungsmitteln, bestehend aus einer Spannmutter (6) mit einem Bolzen (7), wobei die Spannmutter abtriebsseitig oder antriebsseitig angebracht sein kann.

3. Kupplung nach Anspruch 2, **dadurch gekennzeichnet, dass** das Elastomerlager (1A, 1B) zwei Elastomerschichten (10, 11) aufweist, welche durch eine nicht-elastische Zwischenschicht (13) getrennt sind.

4. Kupplung nach einem der Ansprüche 1 bis 3, **dadurch gekennzeichnet, dass** die Elastomerlager (1A) und (1B) eines Kupplungselementes (8) entgegen gesetzte Konuswinkel aufweisen.

5. Kupplung nach einem der Ansprüche 1 bis 4, **dadurch gekennzeichnet, dass** die Elastomerlager (1A, 1B) einen Konuswinkel von 10 - 50° in Bezug zu einer gedachten Achse senkrecht zu den Kupplungsscheiben (2, 3) aufweisen.

6. Kupplung nach Anspruch 5, **dadurch gekennzeichnet**, das der Konuswinkel 25 - 35° beträgt.

7. Kupplung nach einem der Ansprüche 1 bis 6, **dadurch gekennzeichnet, dass** eine Distanzscheibe (15) zwischen dem konusförmigen Bauelement (9), welches das Elastomerlager (1A) trägt, und der Kupplungsscheibe (2, 3) angebracht ist.

8. Kupplung nach einem der Ansprüche 1 bis 7, **dadurch gekennzeichnet, dass** sie mindestens vier Kupplungselemente (8) aufweist.

9. Kupplung nach einem der Ansprüche 1 - 8, **dadurch gekennzeichnet, dass** sie mehrere Ausrichtvorrichtungen (18) aufweist, welche die Kupplungsscheiben (2) und (3) miteinander verbinden und unter Vorspannung exakt zueinander zentrieren.

10. Kupplung nach Anspruch 9, **dadurch gekennzeichnet, dass** die Ausrichtvorrichtungen (18) Passbolzen sind.

11. Kupplung nach einem der Ansprüche 1 - 10, **dadurch gekennzeichnet, dass** sie Vorspann-Hilfsvorrichtungen (17) für die zu spannenden Teile der Kupplung aufweist, welche nach erfolgter Vorspannung ganz oder teilweise entfernt werden können.

12. Kupplung nach einem der Ansprüche 1 - 10, **dadurch gekennzeichnet, dass** sie Hydraulik-Vorspannvorrichtungen (19, 20, 21, 22, 23) aufweist, welche die Vorspannung des Bolzens (7) erleichtert.

13. Verwendung einer Kupplung gemäß einem oder mehreren der Ansprüche 1 - 12, zur Erzielung optimierter Torsionssteifigkeit in Maschinen und Anlagen, in denen große Drehmomente und / oder Kräfte übertragen werden.

14. Verwendung der Kupplung gemäß einem oder mehreren der Ansprüche 1 - 12 in Windkraftanlagen.

## Claims

1. Clutch suitable for the transmission of large torques, essentially consisting of a clutch drive disc (2), a clutch output disc (3), each of which has axially arranged flange pieces for the accommodation of the drive and output means, and a plurality of clutch elements (8) consisting of a plurality of components which are arranged between said discs and are firmly connected thereto by attachment means (6, 7), where each clutch element has a first (1A) and second (1B) axially aligned, conical elastomer bearing which is pretensioned by said attachment means, and said second elastomer bearing (1B) is accommodated and held by a correspondingly matching conical recess in the clutch discs (2, 3),
**characterised in that** said first conical elastomer bearing (1A) is accommodated and held in a tight-fitting manner by a component (9) arranged between drive and output discs and provided with a corresponding cone on its inside.

2. Clutch according to Claim 1, **characterised in that** the clutch element (8) essentially consists of:
(i) a conical ring (9) on its inside,
(ii) a conical elastomer bearing (1A) and a conical elastomer bearing (1B), each of which has at least one elastomer layer (10, 11) bounded by two non-elastic layers (12, 14),
(iii) an output-side tensioning cone (4),
(iv) a drive-side tensioning cone (5), and
(v) attachment means, consisting of a clamping nut (6) with a bolt (7), where the clamping nut can be installed on the output side or drive side.

3. Clutch according to Claim 2, **characterised in that** the elastomer bearing (1A, 1B) has two elastomer layers (10, 11) which are separated by a non-elastic interlayer (13).

4. Clutch according to one of Claims 1 to 3, **characterised in that** the elastomer bearings (1A) and (1B) of a clutch element (8) have opposite cone angles.

5. Clutch according to one of Claims 1 to 4, **characterised in that** the elastomer bearings (1A, 1B) have an cone angle of 10 - 50° relative to an imaginary axis perpendicular to the clutch discs (2, 3).

6. Clutch according to Claim 5, **characterised in that** the cone angle is 25 - 35°.

7. Clutch according to one of Claims 1 to 6, **characterised in that** a spacer disc (15) is installed between the conical component (9) which carries the elastomer bearing (1A) and the clutch disc (2, 3).

8. Clutch according to one of Claims 1 to 7, **characterised in that** it has at least four clutch elements (8).

9. Clutch according to one of Claims 1 - 8, **characterised in that** it has a plurality of alignment devices (18) which connect the clutch discs (2) and (3) to one another and centre them precisely to one another with pre-tensioning.

10. Clutch according to Claim 9, **characterised in that** the alignment devices (18) are close-tolerance pins.

11. Clutch according to one of Claims 1 - 10, **characterised in that** it has pre-tensioning auxiliary devices (17) for the parts of the clutch to be tensioned, all or some of which devices can be removed when the pre-tensioning has taken place.

12. Clutch according to one of Claims 1 - 10, **characterised in that** it has hydraulic pre-tensioning devices (19, 20, 21, 22, 23) which simplify pre-tensioning of the bolt (7).

13. Use of a clutch according to one or more of Claims 1 - 12 for achieving optimised torsional rigidity in machines and equipment in which large torques and/or forces are transmitted.

14. Use of the clutch according to one or more of Claims 1 - 12 in wind turbines.

## Revendications

1. Embrayage adapté pour la transmission de couples importants, constitué essentiellement d'un disque d'entraînement d'embrayage (2), d'un disque de sortie d'embrayage (3), dont chacun comprend des pièces de bride agencées axialement pour l'adaptation des moyens d'entraînement et de sortie, et une pluralité d'éléments d'embrayage (8) constitués d'une pluralité de composants qui sont agencés entre lesdits disques et qui leur sont fermement connectés par des moyens de fixation (6, 7), dans lequel chaque élément d'embrayage comprend un premier (1A) et un second (1B) palier en élastomère conique aligné axialement qui est mis en pré-tension par ledit moyen de fixation, et ledit second palier en élastomère (1B) est adapté et maintenu par un logement conique de forme conjuguée correspondante dans les disques d'embrayage (2, 3),
**caractérisé en ce que** ledit premier palier en élastomère conique (1A) est adapté et maintenu d'une manière par ajustement serré au moyen d'un composant (9) agencé entre les disques d'entraînement et de sortie et muni d'un cône correspondant sur sa partie interne.

2. Embrayage selon la revendication 1, **caractérisé en ce que** l'élément d'embrayage (8) est constitué essentiellement de :
(i) une bague conique (9) sur sa partie interne,
(ii) un palier en élastomère conique (1A) et un palier en élastomère conique (1B), dont chacun comprend au moins une couche en élastomère (10, 11) liée par deux couches non élastiques (12, 14),
(iii) un cône de mise sous tension de côté de sortie (4),
(iv) un cône de mise sous tension de côté d'entraînement (5), et
(v) un moyen de fixation, constitué d'un écrou de serrage (6) avec un boulon (7), dans lequel l'écrou de serrage peut être installé sur le côté de sortie ou le côté d'entraînement.

3. Embrayage selon la revendication 2, **caractérisé en ce que** le palier en élastomère (1A, 1B) comprend deux couches en élastomère (10, 11) qui sont séparées par une couche non élastique (13).

4. Embrayage selon l'une des revendications 1 à 3, **caractérisé en ce que** les paliers en élastomère (1A) et (1B) d'un élément d'embrayage (8) présentent des angles de cône opposés.

5. Embrayage selon l'une des revendications 1 à 4, **caractérisé en ce que** les paliers en élastomère (1A, 1B) présentent un angle de cône de 10 - 50° par rapport à un axe imaginaire perpendiculaire aux disques d'embrayage (2, 3).

6. Embrayage selon la revendication 5, **caractérisé en ce que** l'angle de cône est de 25 - 35°.

7. Embrayage selon l'une des revendications 1 à 6, **caractérisé en ce qu'**un disque d'espacement (15) est installé entre le composant conique (9) qui supporte le palier en élastomère (1A) et le disque d'embrayage (2, 3).

8. Embrayage selon l'une des revendications 1 à 7, **caractérisé en ce qu'**il comprend au moins quatre éléments d'embrayage (8).

9. Embrayage selon l'une des revendications 1 - 8, **caractérisé en ce qu'**il comprend une pluralité de dispositifs d'alignement (18) qui connectent les disques d'embrayage (2) et (3) l'un à l'autre et qui les centrent de façon précise l'un par rapport à l'autre avec une mise sous pré-tension.

10. Embrayage selon la revendication 9, **caractérisé en ce que** les dispositifs d'alignement (18) sont des broches à tolérance serrée.

11. Embrayage selon l'une des revendications 1-10, **caractérisé en ce qu'**il comprend des dispositifs auxiliaires de mise sous pré-tension (17) pour les parties de l'embrayage à mettre sous tension, tous ou certains des dispositifs pouvant être enlevés lorsque la mise sous pré-tension est effectuée.

12. Embrayage selon l'une des revendications 1 - 10, **caractérisé en ce qu'**il comprend des dispositifs de mise sous pré-tension hydrauliques (19, 20, 21, 22, 23) qui simplifient la mise sous pré-tension du boulon (7).

13. Utilisation d'un embrayage selon une ou plusieurs des revendications 1 - 12 pour obtenir une rigidité en torsion optimisée dans des machines et équipement dans lequel des couples et/ou des forces important(e)s sont transmis(e)s.

14. Utilisation de l'embrayage selon une ou plusieurs des revendications 1 - 12 dans des éoliennes.
